# EUROPÄISCHE PATENTANMELDUNG

(11) **EP 1 092 613 A2**
(43) Veröffentlichungstag der Anmeldung: **18.04.2001**
(21) Anmeldenummer: 00121385.9
(22) Anmeldetag: 12.10.2000
(51) Int. Cl.: B62D 33/02, B62D 29/00

(54) **Aussenrahmenprofil für ein Fahrzeug**

(30) Priorität: 13.10.1999 DE 19949373
(71) Anmelder: Kögel Fahrzeugwerke Aktiengesellschaft, D-89079 Ulm (DE)
(72) Erfinder: Volz, Siegfried, 89160 Oberdischingen (DE); de Veer, Holger, 89155 Ringingen (DE); Schall, Hans, 89134 Blaustein (DE); Ruhland, Walter, 89081 Ulm-Lehr (DE)
(74) Vertreter: HOFFMANN - EITLE

(57) **Zusammenfassung**

Es wird ein Außenrahmenprofil für ein Fahrzeug, insbesondere einen Lastkraftwagen oder einen Anhänger, bereitgestellt, das im Wesentlichen aus einem vertikalen Hauptschenkel (2) sowie einem horizontalen Nebenschenkel (3) gebildet wird. Der horizontale Nebenschenkel (3) mündet in ein Auflageprofil (4), in dem Elemente (28) der Ladefläche einsetzbar sind. Das erfindungsgemäße Außenrahmenprofil (1) wird über Verbindungselemente (30, 31) an Querträgern (29) des Fahrzeugs befestigt. Dabei ist eines der Verbindungselemente (31) in einer im Wesentlichen C-förmigen Aufnahme (13) an der Innenseite des vertikalen Hauptstegs (2) vorgesehen.

## Beschreibung

### Technisches Gebiet

Die vorliegende Erfindung betrifft ein Außenrahmenprofil für ein Fahrzeug, vorzugsweise einen Lastkraftwagen oder einen Anhänger mit Querträgern. Das Außenrahmenprofil ist dabei für die Befestigung mit den Querträgern des Fahrzeugs sowie weiteren Funktionselementen des Fahrzeugs ausgebildet.

### Stand der Technik

Aus der DE-OS 26 58 919 ist eine Ladefläche eines Lastkraftwagens bekannt, die einen Brückenrahmen enthält, der durch einen Aluminiumstrang gebildet wird. Dieser Aluminiumstrang besteht aus einem in Einbauposition vertikalen Mittelsteg mit einem davon rechtwinklig abzweigenden unteren Schenkel sowie einem ebenfalls von dem Mittelsteg abzweigenden oberen Schenkel, der zum Aufnehmen von Bodenprofilen der Ladefläche vorgesehen ist. Weiterhin ist in einem oberen Bereich des Mittelstegs eine aus zwei Rippen definierte Nut vorgesehen, die zur Aufnahme eines Halteorgans ausgebildet ist. Das Halteorgan besteht dabei aus einem Metallring, zur Befestigung und Sicherung von Ladung, das über ein im Wesentlichen T-förmiges Element schwenkbar in der Nut des Mittelstegs befestigt ist.

### Darstellung der Erfindung

Der vorliegenden Erfindung liegt das technische Problem zugrunde, ein Außenrahmenprofil für ein Fahrzeug bereitzustellen, an dem einerseits eine Vielzahl von verschiedenen Funktionselementen anbringbar sind, wobei gleichzeitig der benötigte Bauraum sowie das Gewicht des Außenrahmenprofils minimiert werden. Gleichzeitig soll ein Fahrzeug bereitgestellt werden, bei dem mehrere Funktionselemente platz- und gewichtssparend angeordnet sind.

Dieses technische Problem wird mit einem Außenrahmenprofil mit den Merkmalen der Patentansprüche 1 und 17 gelöst.

Der vorliegenden Erfindung liegt der Gedanke zugrunde, ein Außenrahmenprofil für ein Fahrzeug, wie beispielsweise einen Lastkraftwagen oder einen Anhänger, bereitzustellen, das einen vertikalen Hauptschenkel und einen horizontalen Nebenschenkel aufweist, die sich beide im Wesentlichen entlang der Fahrzeuglängsachse erstrecken. Der horizontale Nebenschenkel zweigt in einem oberen Bereich des vertikalen Hauptschenkels von diesem ab und mündet mit seinem freien Ende in einem Auflageprofil zur Aufnahme von Elementen einer Ladefläche. Gleichzeitig ist an dem erfindungsgemäßen Außenrahmenprofil an der zur Fahrzeuglängsachse hin gerichteten Innenseite des vertikalen Hauptschenkels eine erste Aufnahme für ein Verbindungselement des Außenrahmenprofils mit einem Querträger des Fahrzeugs angeordnet, die im Wesentlichen eine C-förmige Gestalt hat. Auf diese Weise kann eine besonders platzsparende, kompakte Bauweise des Außenrahmenprofils realisiert werden, wobei so gleichzeitig auch Gewicht eingespart werden kann.

Vorzugsweise ist an der in Einbaulage oberen Seite des horizontalen Nebenschenkels eine zweite, ebenfalls im Wesentlichen C-förmige Aufnahme für Befestigungsmittel zur Ladungssicherung vorgesehen. Zusätzlich oder alternativ kann in dem oberen Bereich des vertikalen Hauptschenkels auf der Außenseite des Profils, die dem horizontalen Nebenschenkel abgewandt ist, eine weitere, dritte Aufnahme für eine oder mehrere Rungen vorgesehen sein. Weiterhin kann durch die Außenseite des vertikalen Hauptschenkels zusammen mit weiteren Stegen ein geschlossenes Profil gebildet werden, in das zumindest ein Gelenkbolzenträger zur Verbindung mit einer Bordwand aufnehmbar ist. Vorzugsweise ist darüber hinaus durch einen weiteren Bereich der Außenseite des vertikalen Hauptschenkels zusammen mit weiteren Stegen eine Nut definiert, die sich in Einbaulage des Außenrahmenprofils nach unten hin öffnet. In diese sich in Richtung der Fahrzeuglängsachse erstreckende Nut sind Befestigungselemente für eine Seitenplane des Fahrzeugs einhängbar. Weiterhin mündet der vertikale Hauptschenkel vorzugsweise an seiner Unterseite, die der zweiten C-förmigen Aufnahme gegenüberliegt, in eine vierte, im Wesentlichen C-förmige Aufnahme, die zur Befestigung von zumindest einer Sprühnebelunterdrückung dienen kann.

Den Anforderungen eines Fahrzeugs, vorzugsweise eines Lkws bzw. eines Anhängers, in dem das erfindungsgemäße Außenrahmenprofil eingebaut wird, entsprechend, ist es gegebenenfalls sinnvoll, einzelne Funktionselemente allein oder in unterschiedlicher Kombination miteinander an dem erfindungsgemäßen Außenrahmenprofil vorzusehen. So kann es beispielsweise Ausführungsformen geben, in denen das geschlossene Profil zur Aufnahme eines Gelenkbolzenträgers nicht vorgesehen ist, falls das Fahrzeug, in dem das Außenrahmenprofil eingesetzt wird, keine schwenkbare Bordwand besitzt, so dass die Verbindung der Bordwand mit dem Gelenkbolzenträger entfällt.

Nach einer besonders bevorzugten Ausführungsform bildet der untere Teil der dritten Aufnahme zusammen mit einem Steg des geschlossenen Profils und einem die U-förmige Nut bildenden weiteren Steg gemeinsam einen Parallelschenkel, der an der Außenseite des vertikalen Hauptschenkels einstückig mit diesem und dazu zumindest bereichsweise parallel ausgebildet ist. Durch diesen Parallelschenkel wird eine Außenwand des Außenrahmenprofils definiert, die eine besonders platzsparende und kompakte Bauweise des erfindungsgemäßen Außenrahmenprofils ermöglicht, wobei möglichst viele Funktionselemente an dem Außenrahmenprofil anbringbar sind.

Vorzugsweise sind in dem Auflagenprofil zur Aufnahme der Ladefläche vertikale Durchgangsöffnungen vorgesehen, über die das Außenrahmenprofil mit dem Querträger zusätzlich mittels weiterer Verbindungselemente, wie beispielsweise Schrauben, Niete oder ähnliches, verbunden werden können. Zusätzlich kann an der ersten Aufnahme des erfindungsgemäßen Außenrahmenprofils, über die das Außenrahmenprofil mit dem Querträger verbunden wird, ein horizontaler Vorsprung vorgesehen sein, dessen Unterseite in einer Ebene mit der Unterseite des Auflageprofils liegt. Auf diese Weise kann eine besonders breite Auflage des Außenrahmenprofils auf dem Querträger erreicht werden, wobei gleichzeitig die Verbindung zwischen dem Querträger und dem Außenrahmenprofil bei geringem fertigungstechnischen Aufwand sicher und dauerhaft gestaltet werden kann.

Vorzugsweise sind die erste, zweite und vierte Aufnahme mit einer Innenkontur ausgebildet, die im Wesentlichen rechteckig ist. Zusätzlich kann die im Wesentlichen rechteckige Innenkontur der einzelnen Aufnahmen profiliert sein, indem beispielsweise eine oder mehrere Ecken abgeschrägt sind. Alternativ sind auch abgerundete Innenkonturen einsetzbar. Auf diese Weise ist es einerseits möglich, ein sicheres Einführen von Funktionselementen in die jeweiligen Aufnahmen zu ermöglichen, und gleichzeitig kann sichergestellt werden, dass eine definierte Einbauposition der Funktionselemente vertauschungssicher erreicht werden kann. Somit wird der Einbau derartiger Elemente derart erleichtert, dass beispielsweise auch ungelerntes Hilfspersonal bei der Endmontage eingesetzt werden kann.

Die durch den Parallelschenkel definierte Außenwand des Außenrahmenprofils ist zumindest in dem Bereich des Gelenkbolzens zur Verbindung mit der Bordwand durchbrochen, um die Ausbildung eines Gelenks zwischen dem Gelenkbolzen und der Bordwand zu ermöglichen. Weiterhin kann auch der horizontale Nebenschenkel im Bereich der zweiten C-förmigen Aufnahme stellenweise durchbrochen sein, um die Aufnahme von Befestigungsmitteln für die Ladungssicherung zu ermöglichen, falls diese aus Platzbedarfgründen nicht in der C-förmigen Aufnahme unterbringbar sind.

Die dritte, im Wesentlichen C-förmige Aufnahme weist vorzugsweise eine zumindest bereichsweise bogen- oder kreisförmige Ausgestaltung ihrer Innenkontur auf, so dass eine oder mehrere Rungen scharnierartig, im Wesentlichen senkrecht zu der Fahrzeuglängsachse schwenkbar und in Richtung der Fahrzeuglängsachse verschiebbar aufgenommen werden können.

Das erfindungsgemäße Außenrahmenprofil ist vorzugsweise vollständig einstückig ausgebildet. Zur Reduzierung des Gesamtgewichts eines Fahrzeugs ist es vorteilhaft, das erfindungsgemäße Außenrahmenprofil beispielsweise aus Aluminium oder einer Aluminiumlegierung zu fertigen, um die durch die kompakte, materialsparende Bauweise bedingte Gewichtseinsparung weiter zu vergrößern. Neben Aluminium oder Aluminiumlegierungen sind selbstverständlich weitere, im Fahrzeugbau bekannte Leichtbaumaterialien zumindest bereichsweise für das erfindungsgemäße Außenrahmenprofil verwendbar.

Weiterhin betrifft die vorliegende Erfindung ein Fahrzeug, vorzugsweise einen Lastkraftwagen oder einen Anhänger, das mit Querträgern versehen ist, wobei zumindest ein oben beschriebenes erfindungsgemäßes Außenrahmenprofil an den Querträgern befestigt ist.

### Kurze Beschreibung der Zeichnungen

Im Folgenden werden bevorzugte Ausführungsformen der vorliegenden Erfindung unter Bezugnahme auf die beigefügten Zeichnungen näher erläutert und beschrieben, in denen:
- Fig. 1: eine schematische Schnittansicht einer ersten Ausführungsform der vorliegenden Erfindung ist;
- Fig. 2: eine schematische Schnittansicht einer zweiten Ausführungsform der vorliegenden Erfindung ist, wobei Funktionselemente teilweise an dem Außenrahmenprofil angebracht sind; und
- Fig. 3: eine schematische Schnittansicht einer dritten Ausführungsform der vorliegenden Erfindung ist.

### Ausführliche Beschreibung von bevorzugten Ausführungsformen der Erfindung

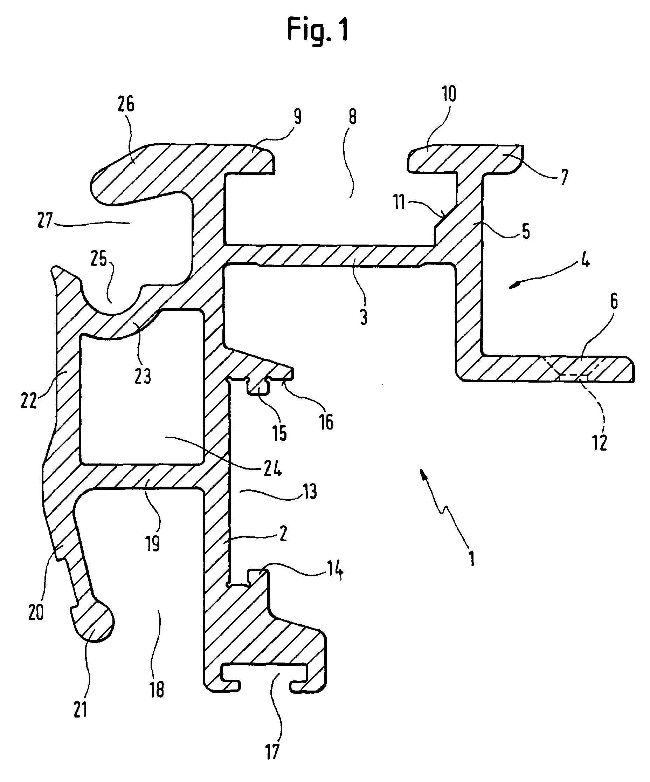

Fig. 1 zeigt ein erfindungsgemäßes Außenrahmenprofil 1 in einer schematischen Schnittansicht. Das Außenrahmenprofil 1 wird im Wesentlichen durch einen vertikalen Hauptschenkel 2 und einen horizontalen Nebenschenkel 3 definiert. Die Begriffe "horizontal" und "vertikal" beziehen sich dabei auf die Einbaulage des Außenrahmenprofils 1 in einem Fahrzeug, wobei sich die Fahrzeuglängsachse senkrecht zu der Zeichenebene von Fig. 1 erstreckt.

Der horizontale Nebenschenkel 3 zweigt in einem in Fig. 1 oberen Bereich im Wesentlichen senkrecht von dem vertikalen Hauptschenkel 2 ab. Der horizontale Nebenschenkel 3 mündet an seiner von dem vertikalen Hauptschenkel 2 wegweisenden, zur Fahrzeuglängsachse hin gerichteten Innenseite in ein Auflageprofil 4. Das Auflageprofil 4 ist durch einen im Wesentlichen zu dem horizontalen Nebenschenkel 3 senkrechten Steg 5 und einem davon an seinem unteren Ende abzweigenden, zu dem horizontalen Nebenschenkel 3 parallelen zweiten Steg 6 gebildet. Darüber hinaus ist an dem oberen Ende des ersten Stegs 5 ein Vorsprung 7 vorgesehen, so dass das Auflageprofil 4 mit den beiden Schenkeln 5 und 6 und dem Vorsprung 7 eine annähernd C-förmige Querschnittsform annimmt.

An der Oberseite des horizontalen Nebenschenkels 3 ist angrenzend an das Auflageprofil 4 eine im Wesentlichen C-förmige Aufnahme 8 vorgesehen. Die C-förmige Aufnahme 8 wird dabei durch den horizontalen Nebenschenkel 3 und den Steg 5 sowie durch den vertikalen Hauptschenkel 2 definiert. Weiterhin sind an der Oberseite des Stegs 5 und des vertikalen Hauptschenkels 2 jeweils Vorsprünge 9, 10 vorgesehen, durch die die C-förmige Gestalt der Aufnahme 8 definiert wird. In der in Fig. 1 gezeigten Ausführungsform ist die C-förmige Aufnahme 8 mit einer im Wesentlichen rechteckigen Innenkontur ausgebildet, wobei in der durch den horizontalen Nebenschenkel 3 und den Steg 5 definierten Ecke eine Abschrägung 11 vorgesehen ist.

An der Innenseite des vertikalen Hauptschenkels 2 ist unterhalb des horizontalen Nebenschenkels 3 eine C-förmige Aufnahme 13 vorgesehen, die eine im Wesentlichen rechteckige Innenkontur aufweist. Die C-förmige Aufnahme 13 wird dabei durch die Innenseite des vertikalen Hauptschenkels 2 sowie Vorsprünge 14 und 15 definiert, die an dem vertikalen Hauptschenkel 2 vorgesehen sind. Eine an dem Vorsprung 15 ausgebildete Kante 16 liegt dabei in einer Ebene mit der Unterseite des Stegs 6 des Auflageprofils 4.

Unterhalb der C-förmigen Aufnahme 8 mündet der vertikale Hauptschenkel 2 in eine weitere C-förmige Aufnahme 17, die eine im Wesentlichen rechteckige Innenkontur aufweist. Auf der von der Fahrzeuglängsachse wegweisenden Außenseite des vertikalen Hauptschenkels 2 ist gegenüberliegend der Aufnahme 13 bzw. seitlich von der Aufnahme 17 eine im Wesentlichen sich nach unten öffnende Nut 18 ausgebildet. Die Nut 18 wird dabei durch den vertikalen Hauptschenkel 2, einen davon im Wesentlichen senkrecht abzweigenden Steg 19 und einen annähernd zu dem Steg 19 senkrechten Steg 20 definiert. Der Steg 20 verläuft dabei leicht schräg zu der Außenseite des vertikalen Hauptschenkels 2, so dass die Nut 18 sich zu ihrem in Fig. 1 unteren Ende hin verjüngt. Das untere Ende des Stegs 20 ist mit einer wulstartigen Abrundung 21 versehen.

Der Steg 20 bildet mit seiner über den Steg 19 hinaus nach oben ragenden Verlängerung einen Parallelschenkel 22, der eine Außenwand des Außenrahmenprofils 1 definiert. Der Parallelschenkel 22 bildet zusammen mit dem Steg 19, dem vertikalen Hauptschenkel 2 sowie einem Steg 23 ein geschlossenes Profil 24. Der Steg 23 erstreckt sich dabei im Wesentlichen parallel zu dem Steg 19. Dabei ist der Steg 23 jedoch bereichsweise bogenförmig ausgebildet, so dass eine gerundete Öffnung 25 an der Oberseite des Stegs 23 definiert wird.

Der Steg 23 bildet zusammen mit dem vertikalen Hauptschenkel 2 sowie einem Vorsprung 26 eine weitere Aufnahme 27. Die Aufnahme 27 ist dabei zu der Außenseite des Außenrahmenprofils 1 hin geöffnet.

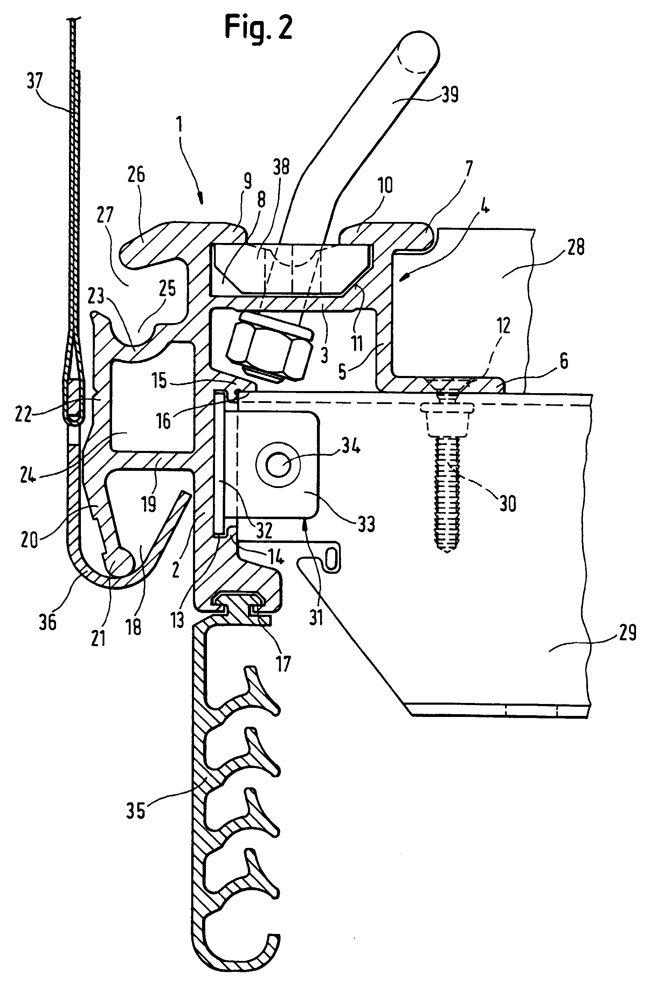

Im Folgenden wird nun in Verbindung mit Fig. 2, die eine weitere Ausführungsform des erfindungsgemäßen Außenrahmenprofils 1 in schematischer Schnittansicht zeigt, die Funktionen der im Zusammenhang mit Fig. 1 beschriebenen Ausführungsform des erfindungsgemäßen Außenrahmenprofils erläutert. Das Außenrahmenprofil nach Fig. 2 unterscheidet sich von der in Fig. 1 gezeigten Ausführungsform lediglich darin, dass in dem Steg 6 des Auflageprofils 4 eine Durchgangsbohrung 12 vorgesehen ist, die sich parallel zu dem vertikalen Hauptschenkel 2 erstreckt, und dass die Aufnahme 17 am unteren Ende des vertikalen Hauptschenkels 2 durch Abschrägung von Innenkanten nicht mehr die in Fig. 1 gezeigte, im Wesentlichen rechteckige Innenkontur aufweist. In Fig. 2 werden für funktionsgleiche, in Fig. 1 erläuterte Komponenten die gleichen Bezugsziffern verwendet.

In dem Auflageprofil 4, das an dem horizontalen Nebenschenkel 3 angebracht ist, ist ein Element 28 einer Ladefläche des Fahrzeugs, das mit dem erfindunsgemäßen Außenrahmenprofil 1 ausgestattet ist, eingesetzt. Dabei begrenzen der Steg 6 bzw. der Vorsprung 7 das Element 28 an dessen Ober- und Unterseite, wobei es mit seiner Seitenkante an dem Steg 5 anliegt.

Unterhalb des Stegs 6 ist ein Querträger 29 dargestellt, der sich quer zur Fahrzeuglängsachse (nicht gezeigt) in dem Fahrzeug erstreckt. Der Querträger 29 ist über ein Verbindungselement 30, wie beispielsweise eine Schraube oder ein Niet, der in der Öffnung 12 vorgesehen ist, mit dem Steg 6 verbunden. In die C-förmige Führung 13 an der Innenseite des vertikalen Hauptstegs 2 ist ein Verbindungselement 31 eingesetzt, das im Wesentlichen aus einer Grundplatte 32 besteht, die in der C-förmigen Aufnahme geführt wird, und einem daran befestigten Plattenelement 33, das eine Durchgangsbohrung 34 aufweist. Über diese Durchgangsbohrung 34 ist das Verbindungselement 31 ebenfalls mit dem Querträger 29 verbunden, so dass dieser über die Befestigungselemente 30 und 31 an dem Außenrahmenprofil 1 befestigt ist. Bei entsprechender Anordnung der Grundplatte 32 zu dem Plattenelement 33 kann zusätzlich zu der Führung des Verbindungselements 31 in der C-förmigen Aufnahme 13 in Richtung der Fahrzeuglängsachse zusätzlich ein Eingreifen des Verbindungselements 31 über Verklemmung in der C-förmigen Aufnahme 13 erfolgen.

In der am unteren Ende des vertikalen Hauptschenkels 2 angeordneten Aufnahme 17 ist eine Sprühnebelunterdrückung 35 angebracht, die mehrere, im Wesentlichen T-förmige Elemente an ihrer Innenseite aufweist. Auf diese Weise kann bei Regen die Entstehung eines Sprühnebels, insbesondere im Bereich der Fahrzeugreifen, wirkungsvoll unterdrückt werden.

In der U-förmigen Nut 18 ist ein hakenförmiges Befestigungselement 36 einer Seitenplane 37 eingehängt. Das Befestigungselement 36 liegt dabei an der wulstartigen Abrundung 21 des Stegs 20 an.

In der C-förmigen Aufnahme 8, die an der Oberseite des horizontalen Nebenschenkels 3 angeordnet ist, ist ein Gleitstein 38 verschiebbar gelagert. Der Gleitstein 38 weist dabei eine der Innenkontur der C-förmigen Aufnahme 8 angepasste Außenkontur auf. An dem Gleitstein 38 ist ein im Wesentlichen U-förmiges Befestigungselement 39 angebracht, das zur Ladungssicherung dient. Wie in Fig. 2 angedeutet, kann der horizontale Nebenschenkel 3 im Bereich des Befestigungselements 39 zur Ladungssicherung durchbrochen sein.

In das geschlossene Profil 24, das an der Außenseite des vertikalen Hauptschenkels 2 ausgebildet ist, ist ein Gleitstein (nicht dargestellt) einschiebbar, der beispielsweise als ein Gelenkbolzenträger ausgebildet sein kann. An einem derartigen Gelenkbolzenträger ist ein sich in Fahrzeuglängsrichtung erstreckender Gelenkbolzen vorgesehen, der mit einem entsprechenden Teil einer Bordwand des Fahrzeugs (nicht dargestellt) ein scharnierartiges Gelenk bilden kann. Zu diesem Zweck kann der die Außenwand des Außenrahmenprofils definierende Parallelschenkel 22 im Bereich des Gelenkbolzens durchbrochen sein.

In die Aufnahme 27, die am oberen, äußeren Ende des vertikalen Hauptschenkels 2 vorgesehen ist, kann eine Runge (nicht dargestellt) eingebracht werden. Abhängig von der individuellen Ausgestaltung der Runge ist es dabei möglich, dass die Runge innerhalb der Aufnahme 27 in Richtung der Fahrzeuglängsachse verschiebbar ist, und/oder aus einer im Wesentlichen vertikalen in eine im Wesentlichen horizontale Lage verschwenkt werden kann. Hierfür kann beispielsweise die bogenförmige Ausnehmung 25 in dem Steg 23 eine Gelenkpfanne bilden.

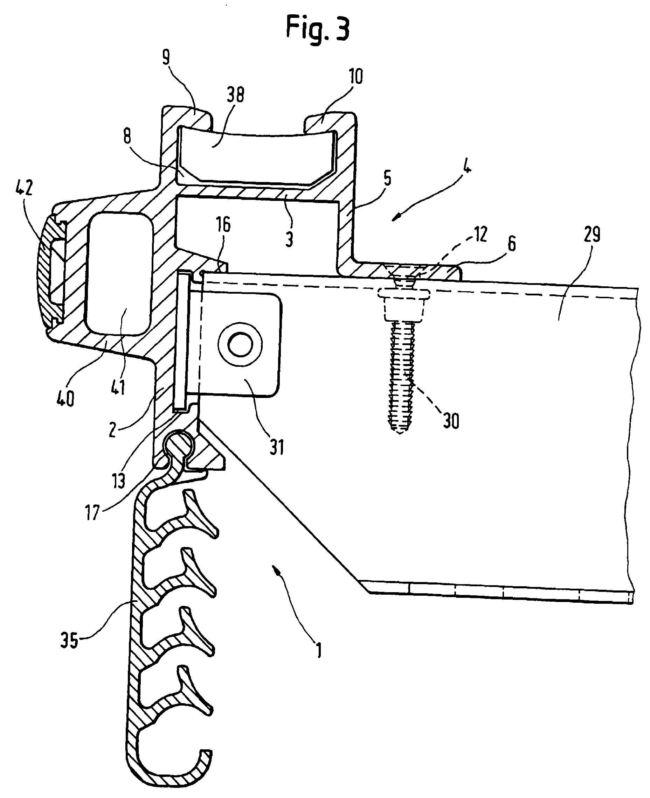

Unter Bezugnahme auf Fig. 3 wird nun eine weitere Ausführungsform der vorliegenden Erfindung erläutert. In Fig. 3 ist das erfindungsgemäße Außenrahmenprofil 1 ebenfalls durch einen vertikalen Hauptschenkel 2 sowie einen dazu im Wesentlichen senkrechten horizontalen Nebenschenkel 3 gebildet. Der horizontale Nebenschenkel 3 mündet an seinem freien Ende in ein Auflageprofil 4, das durch die Stege 5 und 6 definiert wird. Dabei ist der Steg 6 mit einer Bohrung 12 versehen, über die das erfindungsgemäße Außenrahmenprofil 1 durch ein Verbindungselement 30 mit einem Querträger 29 verbindbar ist. Weiterhin ist das Außenrahmenprofil 1 mit dem Querträger 29 über das Verbindungselement 31 verbunden, das in der Ausnehmung 13 an der Innenseite des vertikalen Hauptschenkels 2 vorgesehen ist. Die Aufnahme 17 an der Unterseite des vertikalen Hauptschenkels 2 ist mit einer kreisförmigen Innenkontur ausgebildet, in die eine Sprühnebelunterdrückung 35 eingesetzt ist. An der Oberseite des horizontalen Nebenschenkels 3 ist ein Gleitstein 38 in die Aufnahme 8 eingesetzt, die an ihrer Oberseite durch die Vorsprünge 9 und 10 begrenzt wird. Ein Befestigungselement zur Ladungssicherung ist in Fig. 3 nicht abgebildet.

Im Gegensatz zu den in den Figuren 1 und 2 gezeigten Ausführungsformen der vorliegenden Erfindung ist in der Ausführungsform nach Fig. 3 an der Außenseite des vertikalen Hauptschenkels 2 ein im Wesentlichen C-förmiges Element 40 einstückig mit dem Hauptschenkel 2 ausgebildet. Dadurch wird ein geschlossenes Profil mit einem Hohlraum 41 definiert, in den beispielsweise ein Gelenkbolzenträger zur Befestigung mit einer Bordwand einbringbar ist. Weiterhin ist an dem C-förmigen Element 40 eine Ausnehmung zur Aufnahme eines Deckelelements 42 vorgesehen. Dieses Deckelelement 42 kann beispielsweise zur Befestigung einer Seitenschiebeplane (nicht gezeigt) eingesetzt werden.

Vorzugsweise ist das Außenrahmenprofil 1 einstückig aus Aluminium, einer Aluminiumlegierung oder einem ähnlichen Leichtmetall gefertigt. Somit kann zusätzlich zu der kompakten, materialsparenden Bauweise weiteres Gewicht des erfindungsgemäßen Außenrahmenprofils eingespart werden, wodurch beispielsweise die Nutzlast eines Fahrzeugs, in dem das erfindungsgemäße Außenrahmenprofil eingebaut ist, bei beibehaltenem Gesamtgewicht gesteigert werden kann. Vorzugsweise wird ein erfindungsgemäßes Außenrahmenprofil, wie es in den Figuren 1 bis 3 beispielhaft dargestellt ist, in einem Lastkraftwagen oder einem Anhänger eingesetzt.

## Patentansprüche

1. Außenrahmenprofil für ein Fahrzeug mit einem vertikalen Hauptschenkel (2) und einem davon in seinem oberen Bereich abzweigenden horizontalen Nebenschenkel (3), der an seiner von dem vertikalen Hauptschenkel (2) wegweisenden, zur Fahrzeuglängsachse hin gerichteten Innenseite in ein Auflageprofil (4) zur Aufnahme einer Ladefläche (28) mündet, dadurch gekennzeichnet, dass an der Innenseite des vertikalen Hauptschenkels (2) eine erste, im Wesentlichen C-förmige Aufnahme (13) für zumindest ein Verbindungselement (31) des Außenrahmenprofils (1) mit einem Querträger (29) des Fahrzeugs vorgesehen ist.

2. Außenrahmenprofil nach Anspruch 1, dadurch gekennzeichnet, dass an einer Oberseite des horizontalen Nebenschenkels (3) eine zweite, im Wesentlichen C-förmige Aufnahme (8) für Befestigungsmittel (38, 39) zur Ladungssicherung vorgesehen ist.

3. Außenrahmenprofil nach Anspruch 1 oder 2, dadurch gekennzeichnet, dass in einem oberen Bereich des vertikalen Hauptschenkels (2) auf der dem horizontalen Nebenschenkel (3) abgewandten Außenseite des Profils eine dritte Aufnahme (27) für zumindest eine Runge vorgesehen ist.

4. Außenrahmenprofil nach einem der vorangegangenen Ansprüche, dadurch gekennzeichnet, dass an dem vertikalen Hauptschenkel (2) auf seiner Außenseite ein geschlossenes Profil zur Aufnahme eines Gelenkbolzenträgers zur Verbindung mit einer Bordwand vorgesehen ist.

5. Außenrahmenprofil nach einem der vorangegangenen Ansprüche, dadurch gekennzeichnet, dass auf der Außenseite des vertikalen Hauptschenkels (2) eine im Wesentlichen U-förmige, sich im Einbauzustand nach unten öffnende Nut (18) ausgebildet ist, in die eine Seitenplanenbefestigung (36, 37) einhängbar ist.

6. Außenrahmenprofil nach einem der vorangegangenen Ansprüche, dadurch gekennzeichnet, dass der vertikale Hauptschenkel (2) an seiner unteren Seite in eine vierte, im Wesentlichen C-förmige Aufnahme (17) zur Befestigung einer Sprühnebelunterdrückung (35) mündet.

7. Außenrahmenprofil nach Anspruch 5 oder 6, dadurch gekennzeichnet, dass durch einen das geschlossene Profil bildenden Steg und einen die Nut (18) außen begrenzenden Steg (20) ein mit dem vertikalen Hauptschenkel (2) einstückig verbundener Parallelschenkel (22) gebildet wird, der die Außenwand des Außenrahmenprofils (1) definiert.

8. Außenrahmenprofil nach einem der vorangegangenen Ansprüche, dadurch gekennzeichnet, dass in dem Auflagenprofil (4) vertikale Durchgangsöffnungen (12) zur Aufnahme von weiteren Verbindungselementen (30) des Außenrahmenprofils (1) mit dem Querträger (29) vorgesehen sind.

9. Außenrahmenprofil nach einem der vorangegangenen Ansprüche, dadurch gekennzeichnet, dass die erste, zweite und vierte Aufnahme (13; 8; 17) jeweils eine im Wesentlichen rechteckige Innenkontur aufweisen.

10. Außenrahmenprofil nach Anspruch 9, dadurch gekennzeichnet, dass die zweite Aufnahme (8) zusätzlich zu der im Wesentlichen rechteckigen Innenkontur profiliert ist.

11. Außenrahmenprofil nach einem der vorangegangenen Ansprüche, dadurch gekennzeichnet, dass an der ersten Aufnahme (13) ein horizontaler Vorsprung (15) vorgesehen ist, dessen Unterseite (16) in einer Ebene mit einem die Unterseite des Auflageprofils (4) definierenden Steg (6) liegt.

12. Außenrahmenprofil nach einem der Ansprüche 3 bis 11, dadurch gekennzeichnet, dass die dritte Aufnahme (27) eine zumindest teilweise bogenförmig ausgebildetes Innenkontur (25) aufweist, die ein Scharnier für die zumindest eine Runge bildet.

13. Außenrahmenprofil nach einem der Ansprüche 7 bis 12, dadurch gekennzeichnet, dass der Parallelschenkel (22) zumindest in einem Bereich eines Gelenkbolzens zur Verbindung mit der Bordwand durchbrochen ist.

14. Außenrahmenprofil nach einem der Ansprüche 2 bis 13, dadurch gekennzeichnet, dass der horizontale Nebenschenkel (3) im Bereich der zweiten C-förmigen Aufnahme (8) stellenweise zur Aufnahme von Befestigungsmitteln (38, 39) für die Ladungssicherung durchbrochen ist.

15. Außenrahmenprofil nach einem der vorangegangenen Ansprüche, dadurch gekennzeichnet, dass das gesamte Außenrahmenprofil (1) einstückig gefertigt ist.

16. Außenrahmenprofil nach einem der vorangegangenen Ansprüche, dadurch gekennzeichnet, dass das Außenrahmenprofil (1) aus Aluminium oder einer Aluminiumlegierung besteht.

17. Fahrzeug, insbesondere Lastkraftwagen oder Anhänger, mit Querträgern (29), dadurch gekennzeichnet, dass an den Querträgern (29) Außenrahmenprofile (1) nach zumindest einem der Ansprüche 1 bis 16 befestigt sind.
